# EUROPÄISCHE PATENTSCHRIFT

(11) **EP 2 073 948 B1**
(45) Veröffentlichungstag und Bekanntmachung des Hinweises auf die Patenterteilung: **20.01.2010**
(21) Anmeldenummer: 07801323.2
(22) Anmeldetag: 10.09.2007
(51) Int. Cl.: B23B 29/034, B23D 21/04, B23D 79/12, B23D 3/00

(54) **DREHDURCHFÜHRUNG FÜR EINE ROHRSCHNEIDEMASCHINE**
ROTARY TRANSMISSION LEADTHROUGH FOR A PIPE CUTTING MACHINE
PASSAGE TOURNANT POUR MACHINE À COUPER DES TUYAUX

(30) Priorität: 21.09.2006 DE 102006045095
(43) Veröffentlichungstag der Anmeldung: 01.07.2009
(73) Patentinhaber: Rattunde & Co GmbH, 19288 Ludwigslust (DE)
(72) Erfinder: RATTUNDE, Ulrich, 19322 Bentwisch (DE)
(74) Vertreter: Groth, Wieland
(86) Internationale Anmeldenummer: PCT/DE2007/001588
(87) Internationale Veröffentlichungsnummer: WO 2008/034407

(56) Entgegenhaltungen:
- DE-A1- 1 463 226
- DE-C1- 3 617 103
- DE-C1- 19 856 738

## Beschreibung

Die Erfindung betrifft eine Drehdurchführung, eine Maschine zum Bearbeiten von Enden eines stangenförmigen Profilmaterials und ein Verfahren mit einer Drehdurchführung und ein Verfahren zum Bearbeiten von Enden eines stangenförmigen Profilmaterials.

Drehdurchführungen sind im Stand der Technik bekannt. Hlerkörnmlicherweise wird eine zentral in einer rotierenden Welle angeordnete Schubstange in Längsrichtung der Welle an einer ihrer Stirnseiten hin und her angetrieben. Die Translationsbewegung des Antriebs wird durch die Schubstange z.B. auf ein Werkzeug am anderen Ende der Schubstange übertragen und dieses so gesteuert. Es ist auch bekannt, mehrere teleskopartig ineinander verschachtelte Schubstangen konzentrisch in einer rotierbaren Welle anzuordnen und mehrere Werkzeuge zu steuern. Nachteilig bei den bekannten Drehdurchführungen ist jedoch die Tatsache, dass mehrere translatorische Antriebsmechanismen für die Schubstangen an der Stirnseite der drehbaren Welle angeordnet werden müssen. An derselben Stirnseite ist dann auch der Antrieb für die Welle selbst vorgesehen. Dadurch entstehen Platzprobleme.

Am anderen Ende der teleskopartig verschachtelten Schubstangen müssen die Translationsbewegungen entschachtelt und den einzelnen Werkzeugen zugeführt werden. Das setzt eine zusätzliche Mechanik voraus.

In der DE 36 17 103 C1 ist eine mit einer Werkzeugspanneinrichtung versehene Spindel einer Werkzeugmaschine beschrieben. Dabei weist die drehbar, in einer Werkzeugmaschine gelagerte Spindel Spannmittel zum Ein- und Ausspannen eines Werkzeugs auf. Ein Energiespeicher ist bei nicht eingespanntem Werkzeug geladen und bei eingespanntem Werkzeug zum Anziehen der Spannmittel wenigstens teilweise entladen.

Aus der DE 198 56 738 C1 ist eine Werkzeugmaschine zur Bearbeitung von Werkstücken bekannt. Dabei ist eine Werkzeughalterung mittels eines Wälzgewindetriebes mit einer Wälzgewindespindel und einer Spindelmutter verfahrbar. Die unabhängige Steuerung mehrerer Werkzeuge ist hier jedoch nicht möglich.

Aus der DE 14 632 26 ist ein automatisches Rohrschneidegerät bekannt. Dabei ist zum Bearbeiten der Rohre eine Einrichtung vorgesehen, die das zu bearbeitende Rohr führt und dreht, sowie ein Scheidwerkzeug, das entlang der Mittellinie des Rohres geführt wird. Und eine Steuerschaltung, die das Schneidwerkzeug und die Führ- und Dreheinrichtung koordiniert.

Es ist Aufgabe der vorliegenden Erfindung, eine verbesserte Drehdurchführung, ein Verfahren mit einer Drehdurchführung, eine Schneidmaschine, die eine solche Drehdurchführung aufweist, und ein Verfahren zum Bearbeiten von Enden eines stangenförmigen Profilmaterials zur Verfügung zu stellen.

Die Aufgabe wird in ihrem ersten Aspekt durch eine Drehdurchführung mit den Merkmalen des Anspruchs 1 erfüllt. Die erfindungsgemäße Drehdurchführung weist eine um eine in Längsrichtung verlaufende Längsachse drehbare Welle mit wenigstens einer in Längsrichtung verlaufenden Längsbohrung auf, in der jeweils eine Schubstange relativ zur Welle hin und her verschiebbar angeordnet ist. Wenigstens ein Durchbruch ist in einer seitlichen Wellenwandung vorgesehen, der jeweils einer Längsbohrung zugeordnet ist und die Längsbohrung mit dem Äußeren der Welle verbindet. Die Ränder des wenigstens einen seitlichen Durchbruchs sind vorzugsweise von den Stirnseiten der Welle beanstandet, und sie verlaufen vollständig in der seitlichen Wellenwandung. Außerhalb der Welle ist wenigstens eine in Längsrichtung verfahrbare, jeweils einer der Schubstangen zugeordnete Schubgabel vorgesehen. Zwischen der zugeordneten Schubgabel und der zugeordneten Schubstange ist eine Wirkverbindung vorgesehen. Die Wirkverbindung ist derart ausgestaltet, dass sie zum einen eine Hin- und Herbewegung relativ zur Welle der zugeordneten Schubgabel auf die zugeordnete Schubstange überträgt und zum anderen eine Drehbewegung der Welle relativ zur zugeordneten Schubgabel ermöglicht.

Die Wirkverbindung weist vorzugsweise einen durch den zugeordneten Durchbruch greifenden Arm auf, der translationsfest mit der zugehörigen Schubstange verbunden ist, wobei der Durchbruch in Längsrichtung länger ausgebildet ist als die Ausdehnung des Teils des Arms im Durchbruch, wodurch der Arm im Durchbruch in Längsrichtung hin und her verschiebbar ist. Diese Ausbildung gestattet die Durchführung der Hin- und Herbewegung von außen in die Längsbohrung hinein.

Zur exakten Bewegungsübertragung ist der Arm günstigenfalls translationsfest mit der zugeordneten Schubgabel verbunden.

In einer besonders stabilen Ausführungsform der Erfindung ist wenigstens ein die Welle jeweils im Abschnitt eines Durchbruchs umlaufendes Ringbauteil, von dem der Arm in den Durchbruch hinein absteht, vorgesehen.

Der Arm ist vorzugsweise positionsfest am Ringbauteil angeformt. Das Ringbauteil kann auf der Welle hin und her verschiebbar angeordnet sein, und somit die Hin- und Herbewegung übertragen. Die verschiebbare Verbindung kann günstigenfalls durch ein Kugellager ausgebildet sein.

Vorieühafterweise weist die Schubgabel einen die Welle konzentrisch umgreifenden Ringabschnitt auf, der über ein äußeres Lager mit einem gegenüber dem Ringabschnitt rotierbaren, innen in dem Ringabschnitt konzentrisch angeordneten Ringbauteil verbunden ist. Vorzugsweise ist das äußere Lager ein Schrägkugellager.

An jedem Ringabschnitt kann eine Nase vorgesehen sein, an der jeweils eine Antriebseinrichtung angreift und die Schubgabel hin- und her verschiebt. Die Antriebseinrichtung kann eine mit der Nase translationsfest verbundene Gewindestange aufweisen, die vom Antrieb abgeht.

Um Verkippungen der Schubgabel zu verhindern, ist jede der Schubgabeln an einer entlang der Welle in Längsrichtung verlaufenden Führungsstange geführt.

In einer besonders bevorzugten Ausführungsform der Erfindung ist eine Mehrzahl von nebeneinander in der Welle angeordneten Längsbohrungen und einer Mehrzahl den Längsbohrungen eins zu eins zugeordneten Durchbrüchen vorgesehen, die in Längsrichtung um wenigstens ihre jeweilige Längsausdehnung versetzt hintereinander angeordnet sind. So können mehrere Translationsbewegungen in die Welle hinein geführt werden.

Vorzugsweise sind die mehreren Längsbohrungen jeweils exzentrisch zur Drehachse der Welle angeordnet. Insbesondere gestattet die exzentrische Anordnung der mehreren Längsbohrungen eine um die Drehachse rotationssymmetrische Anordnung der Mehrzahl von Längsbohrungen, die parallel zueinander in Längsrichtung der Welle in die Welle eingelassen sind.

Entsprechend weist die besonders bevorzugte Ausführungsform der Erfindung eine Mehrzahl in Längsrichtung versetzten, hintereinander an der Welle jeweils in Abschnitt eines Durchbruchs angeordneten, Schubgabeln auf.

Vorteilhafterweise können Translationsantriebe für jede der Schubstangen somit zunächst neben der Welle angeordnet sein und insbesondere ist die Translationsbewegung seitlich durch die Wellenwandung, das heißt durch die seitliche Zylinderwandung der Welle, auf in der Welle nebeneinander angeordnete Schubstangen übertragbar. Insgesamt bietet sich somit für die Anordnung der Antriebe der Schubstangen in einer Maschine seitlich der Welle deutlich mehr Platz als bei teleskopartig ineinander verschachtelten Schubstangen.

Die Aufgabe wird in ihrem zweiten Aspekt durch eine eingangs genannte Maschine zum Bearbeiten von Enden eines stangenförmigen Profilmaterials gelöst mit einer Haltevorrichtung für das Profilmaterial und mit einer oben beschriebenen Drehdurchführung und mit wenigstens einer mit jeweils einer Schubstange in Wirkverbindung stehenden Schneide, die an einem der Haltevorrichtung zugewandten Ende der Welle zur Bearbeitung des Endes des stangenförmigen Profilmaterials vorgesehen ist. Die Maschine ist vorzugsweise eine Rohrendenbearbeitungsmaschine.

Die Maschine ist vorzugsweise Bauteil eines Sägezentrums für metallisches Profilmaterial, insbesondere Metallrohre. Ein Sägezentrum zeichnet sich dadurch aus, dass mehrere hintereinander ausführbare Bearbeitungsschritte beim Bearbeiten von Rohren in einer Maschine integral ausführbar sind. Nach dem Abschneiden eines Rohrabschnitts von einem Rohr, wird das Rohrende häufig Kundenwünschen entsprechend angepasst und deshalb weiteren Behandlungsschritten unterworfen, wie beispielsweise dem Anfasen. Manchmal ist es erforderlich, die Rohrenden nicht mit einer rotationssymmetrischen Fase zu versehen, sondern entlang des Umfangs des Rohrendes beispielsweise Fasen mit einem das Rohrende wellenartig umlaufenden Profil vorzusehen. Derartige Fasen sind herstellbar, wenn die Schneidwerkzeuge während der Rotation der Welle radial im Rohrquerschnitt verschiebbar sind. Während des Anfasvorganges rotiert die Welle, an deren dem Profilmaterial zugewandten Ende die Schneidwerkzeuge angeordnet sind, um ihre Längsachse. Das Profilmaterial ist dabei in Verlängerung der Längsachse mit seinem Ende den Schneidwerkzeugen gegenüberliegend angeordnet. Durch die Rotation der Schneidwerkzeuge erhält das Rohrende eine Fase. Durch periodisches radiales Verschieben der Schneiden kann die Fase eine umlaufende Wellenstruktur erhalten.

Ein weiterer Vorteil besteht darin, dass das Rohrende durch die radial beweglichen Schneiden mit Hinterdrehungen, Einstichen und Konturen während der Drehung ausgestaltet werden kann.

Um die translatorische Hin- und Herbewegung der Schubstange in eine radiale Bewegung der Schneidwerkzeuge umzusetzen, sind Umlenkmechanismen zwischen Schubstange und Schneidwerkzeug vorgesehen. Vorzugsweise ist ein der Haltevorrichtung zugewandtes Ende der Schubstange angeschrägt und eine quer zur Schubstange hin und her bewegliche Schneide ist vorgespannt. Die Schneide weist ein korrespondierend abgeschrägtes Ende auf und die beiden abgeschrägten Enden stehen in Wirkverbindung miteinander. Es sind jedoch auch andere Umlenkmechanismen, beispielsweise über ein Zahnrad, das in zugehörige Zahnreihen der Schubstange und des Schneidwerkzeugs eingreift, denkbar sowie ein exzentrisch gelagerter zweiarmiger Hebel oder eine Gelenkstange.

Hinsichtlich des ersten Verfahrens wird die Aufgabe mit einer Drehdurchführung gelöst, indem eine Welle mit wenigstens einer in Längsrichtung verlaufenden Längsbohrung um eine in Längsrichtung verlaufende Längsachse gedreht wird, eine Hin- und Herbewegung wenigstens einer außerhalb der Welle in Längsrichtung verfahrbaren, jeweils einer der Schubstangen zugeordneten Schubgabel durch wenigstens einen seitlichen Durchbruch in einer Wellenwandung, die jeweils einer Längsbohrung zugeordnet ist, hindurchgeführt wird, und eine in der Längsbohrung angeordnete Schubstange hin und her verschoben wird.

In ihrem vierten Aspekt wird die Aufgabe durch ein Verfahren zum Bearbeiten von Enden eines stangenförmigen Profilmaterials mit einer vorgenannten Maschine gelöst, indem das Profilmaterial in der Haltevorrichtung fixiert wird, ein gewünschtes Fasenprofil in die Steuerung eingegeben wird und der Motor und die Antriebe angesteuert werden, um das gewünschte Fasenprofil am Rohrende zu erzeugen.

Die Erfindung wird anhand von Ausführungsbeispielen in neun Figuren beschrieben. Dabei zeigen:
- Fig. 1: eine perspektivische Ansicht einer erfindungsgemäßen Drehdurchführung für drei Schneidwerkzeuge,
- Fig. 2: eine perspektivische Ansicht der Urenaurcnfunrung in Fig. 1 fur ein Schneidwerkzeug,
- Fig. 3: eine mechanische Drehdurchführung gemäß Fig. 1,
- Fig. 4: eine Welle der Drehdurchführung in den Figuren 1-3,
- Fig. 5: eine Schnittansicht einer Schubgabel der Figuren 1-3,
- Fig.6: eine erste Ausführungsform eines Umlenkmechanismus zwischen Schubstange und Schneidwerkzeug,
- Fig. 7: eine zweite Ausführungsform eines Umlenkmechanismus,
- Fig. 8: eine dritte Ausführungsform eines Umlenkmechanismus,
- Fig. 9: eine vierte Ausführungsform eines Umlenkmechanismus.

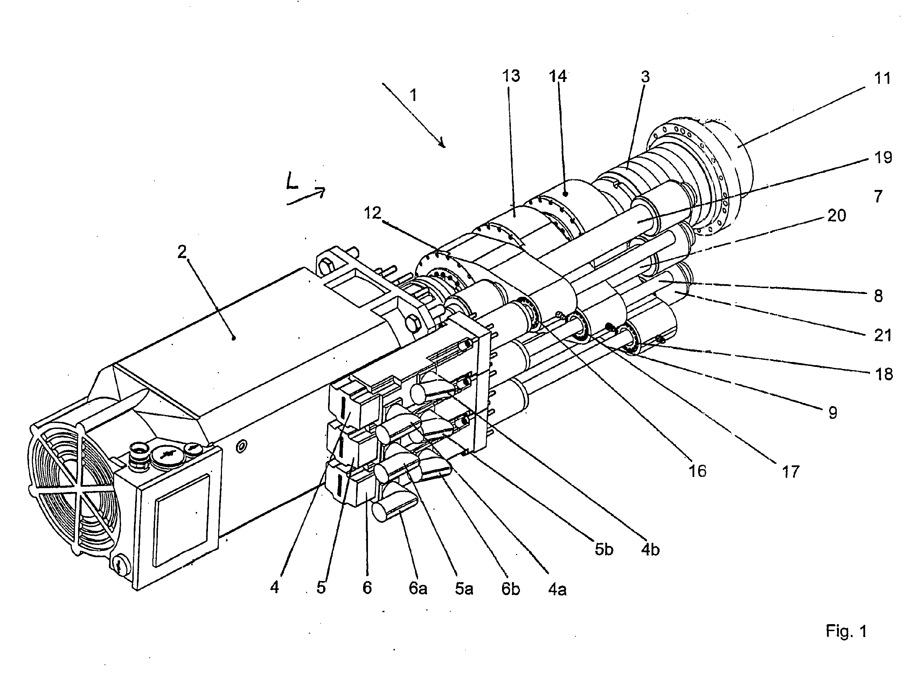

Fig. 1 zeigt die erfindungsgemäße Drehdurchführung 1 mit einem eine rotierbare Welle 3 antreibenden Motor 2 und mit drei Antrieben 4, 5, 6 für drei Gewindestangen 7, 8, 9, wobei jeweils einer der Antriebe 4, 5, 6 genau eine der Gewindestangen 7, 8, 9 antreibt. Die Drehdurchführung 1 ist Bauteil einer Rohrendenbearbeitungsmaschine, die wiederum Bauteil eines Sägzentrums oder einer Rohrschneidemaschine ist. Die Antrieb 4,5,6 und/oder der Motor sind NC-gesteuert. Die numerische Steuerung ist nicht eingezeichnet.

Das in Längsrichtung der Welle 3 eine Ende steht in Wirkverbindung mit dem Motor 2, während ein gegenüberliegendes anderes Ende der Welle 3 ein Schneidwerkzeug 11 mit drei (nicht eingezeichneten) Schneiden aufweist, die zur Bearbeitung des Endes eines Rohrabschnittes bestimmt sind. Der Rohrabschnitt ist in Fig. 1 nicht eingezeichnet. Während des Bearbeitungsvorganges ist die Längsachse des Rohrabschnitts in gerader Verlängerung der Längsachse der Welle 3 in einer Haltevorrichtung einer Rohrschneidemaschine angeordnet.

Die Welle 3 durchdringt drei Schubgabeln 12, 13, 14 und ist in jeder von ihnen rotierbar gelagert Die drei Schubgabeln 12, 13, 14 sind jeweils in Längsrichtung der Welle 3 auch während der Rotation der Welle 3 auf ihr hin und her verschiebbar. Jede der drei Schubgabeln 12, 13, 14 ist mit jeweils genau einer der drei Gewindestangen 7, 8, 9 in Längsrichtung translationsfest verbunden. Jeder der drei Gewindestangenantriebe 4, 5, 6 treibt eine Hin- und Herbewegung der zugehörigen Gewindestange 7, 8, 9 in Längsrichtung der Welle 3 an. Jeder der drei Gewindestangenantriebe 7, 8, 9 ist separat steuerbar, und er weist dazu jeweils zwei Anschlüsse 4a, 4b, 5a, 5b, 6a, 6b auf. Die jeweils zwei Anschlüsse 4a, 4b, 5a, 5b, 6a, 6b sind zum Ein- bzw. Auslassen von hydraulischer Steuerflüssigkeit jeder der drei Antriebe 4, 5, 6 vorgesehen.

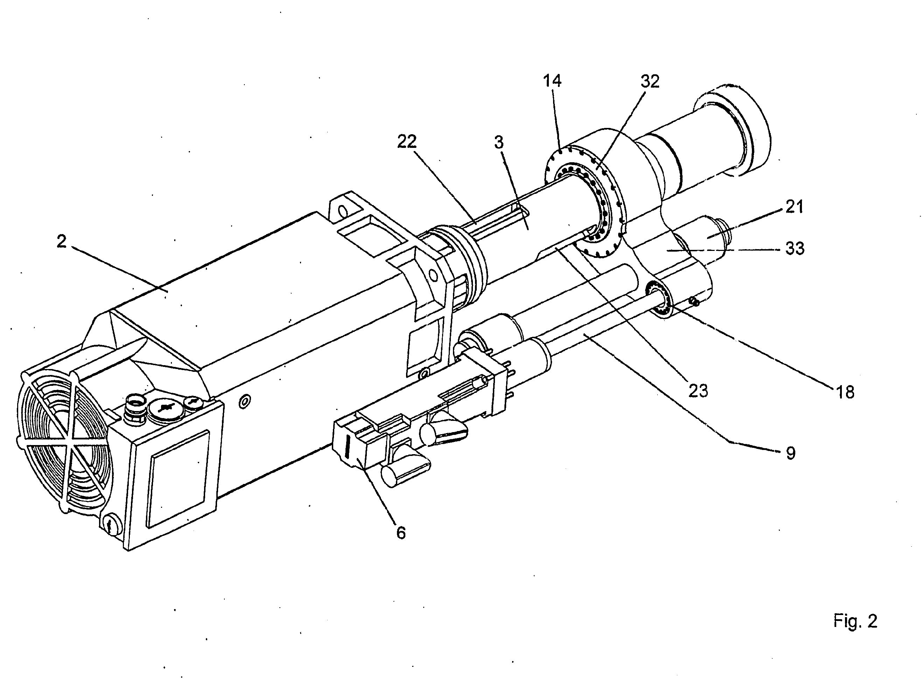

Fig. 2 zeigt einen Teil der Drehdurchführung 1 mit der dritten, dem zu bearbeitenden Rohr benachbarten Schubgabei 14, die von dem zugeordneten dritten Antrieb 6 der dritten Gewindestange 9 angetrieben wird. Die drei Schubgabeln 12, 13, 14 sind baugleich. Die dritte Schubgabel 14 weist auch einen Ringabschnitt 32 und eine von dem Ringabschnitt 32 seitlich abstehende Nase 35 auf. Der Ringabschnitt 16 umschließt die Welle 3 vollständig drehbar. Die bodennächste der drei Gewindestangen 9 ist durch ein in der zugehörigen Nase 35 vorgesehenes Lager 18 translationsfest geführt.
Jede Schubgabel 12, 13, 14 ist mittels einer Führung 19, 20, 21 stabilisiert. Die Nase der dritten Schubgabel 14 ist entlang einer dritten Führung 21 in Längsrichtung hin und her verschiebbar gelagert.

Die Welle 3 kann in jedem Ringabschnitt und insbesondere dem dritten Ringabschnitt 32 rotieren. Darüber hinaus ist die dritte Schubgabel 14 auf der Welle 3 entlang deren Längsrichtung hin und her verschiebbar, wobei die Welle 3 in der dritten Schubgabel 14 in jeder ihrer translatorischen Positionen rotierbar im Ringabschnitt 32 ist.

In Fig. 2 sind zwei jeweils einer weiteren Schubgabel 12, 13 zugeordnete Durchbrüche 22, 23 zu erkennen. Ein baugleicher dritter Durchbruch ist von der dritten Schubgabel 14 verdeckt. Der erste dem Motor zugewandte Durchbruch 22 ist der ersten Schubgabel 12 und der zweite Durchbruch 23 ist der zweiten Schubgabel 13 zugeordnet. In der Welle 3 verlaufen drei Führungen in Form von in Längsrichtung der Welle 3 eingelassenen Bohrungen 26, 27, 28, wobei in jeder der Bohrungen 26, 27, 28 jeweils eine Schubstange 43, 44, 45 gegenüber der welle 3 mn und ner verschiebbar gelagert ist. Die erfindungsgemäße Drehdurchführung 1 gestattet die Übertragung einer Hin- und Herbewegung der Gewindestange 7, 8, 9 über die zugehörige Schubgabel 12, 13, 14 auf jeweils eine zugeordnete Schubstange 43, 44, 45 im Inneren der rotierenden Welle 3. Während des Übertragungsvorganges rotiert die Welle 3 mit den drei Schubstangen 43, 44, 45, wobei die drei Schubstangen 43, 44, 45 gegenüber der Welle 3 rotationsfest gelagert sind.

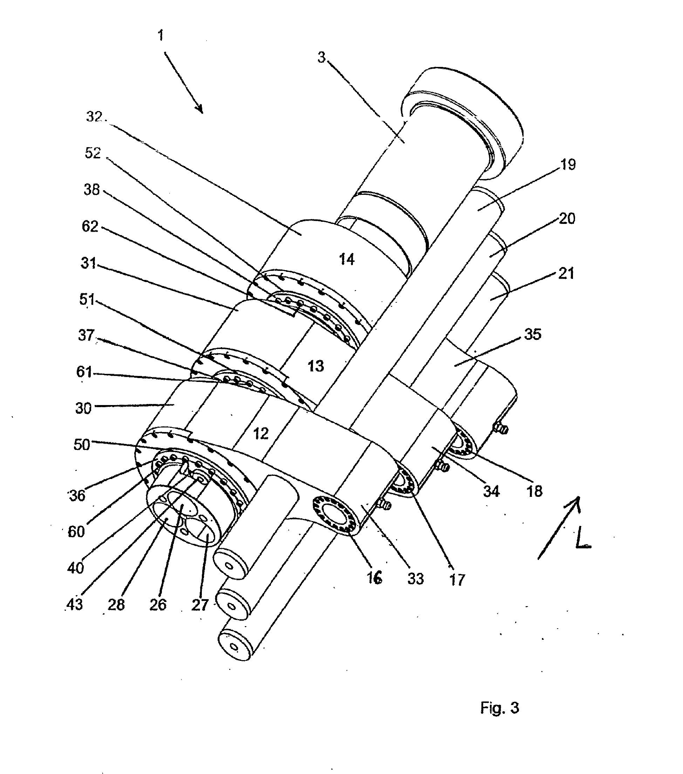

Fig. 3 zeigt die Drehdurchführung gemäß Fig. 1 und 2 ohne den Motor 2 und ohne die drei Gewindestangenantriebe 4, 5, 6. Das dem Motor 2 zugewandte Ende der Welle 3 ist in einem Querschnitt zu sehen. In Längsrichtung der Welle 3 verlaufen die drei Bohrungen 26, 27, 28, die entlang ihrer gesamten Länge in einem Querschnitt senkrecht zur Längsrichtung kreisförmig ausgebildet sind. Die drei Bohrungen 26, 27, 28 sind in der Welle in einem Drehwinkel von 120° angeordnet. Jeder Bohrung 26, 27, 28 ist in der Wellenwandung jeweils ein seitlicher Durchbruch 22, 23 zugeordnet, der den Innenraum der Bohrung 26, 27, 28 nach außen öffnet. Durch die Durchbrüche wird die Translationsbewegung in das Innere der Welle 3 übertragen.

Konzentrisch zwischen der Ringinnenwandung jedes Ringabschnitts 30, 31, 32 und der Außenwandung der Welle 3 ist ein Ringbauteil 36, 37, 38 mit einem in den Durchbruch 22, 23 greifenden Arm 40 vorgesehen. Das Ringbauteil 36, 37, 38 ist auf der Welle 3 in Längsrichtung hin und her verschiebbar angeordnet. Jeder Arm 40 weist eine Halterung zur translationsfesten Befestigung der zugehörigen Schubstange 43, 44, 45 auf. Jedes Ringbauteil 36, 37, 38 ist über jeweils zwei Kugellager 50, 60, 51, 61, 52, 62 auf der Welle 3 gelagert. Das Ringbauteil 36, 37, 38 ist gegenüber der Welle 3 rotationsfest. Zwischen dem Ringbauteil 36, 37, 38 und der Schubgabel 12, 13, 14 ist ein Schrägkugellager 50, 51, 52 vorgesehen. Das Schrägkugellager 50, 51, 52 ge-stattet eine relative Rotationsbewegung zwischen Ringbauteil 36, 37, 38 und Schubgabel 12, 13, 14, während Translationsbewegungen der Schubgabel 12, 13, 14 über das Schrägkugellager 50, 51, 52 auf das Ringbauteil 36, 37, 38 übertragbar sind.

Die in Fig. 3 dargestellte Drehdurchführung 1 weist drei Schubstangen 43, 44, 45 auf, von denen nur eine Stirnfläche der ersten Schubstange 43 zu erkennen ist, deren jeweiliges dem Motor 2 abgewandtes Ende mit einem Schneidwerkzeug in Wirkverbindung steht und dieses steuert.

Die Nasen 33, 34, 35 der Schubgabeln 12, 13, 14 sind winkelversetzt zueinander angeordnet und durch jede der Nasen 33, 34, 35 ist eine Führungsstange 19, 20, 21 geführt. Die Nase 33, 34, 35 jeder Schubgabel 12, 13, 14 ist translatorisch in Längsrichtung auf der zugehörigen Führungsstange 19, 20 21 hin und her bewegbar. Die drei Führungsstangen 19, 20, 21 sind positionsfest gegenüber dem Motor 2, beispielsweise am Gehäuse der Sägemaschine, befestigt.

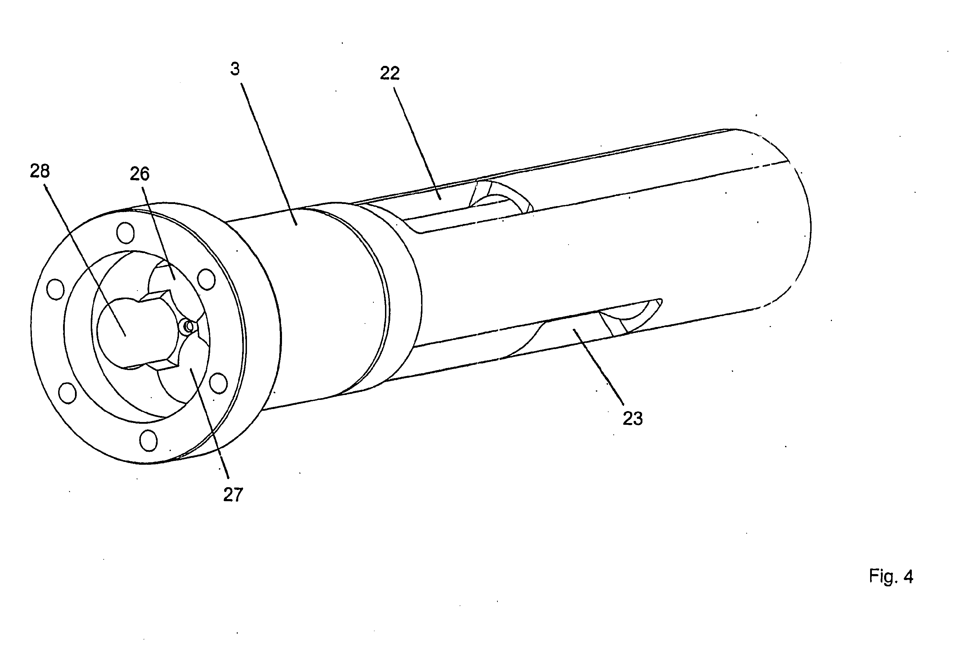

Fig. 4 zeigt die rotierbare Welle 3. Der in Fig. 4 vordere linke Wellenabschnitt weist das dem Motor 2 zugewandte Ende der rotierbaren Welle 3 auf. Die Welle 3 ist mit dem Motor 3 über einen Fiansch drehfest verbunden und durch den Motor 3 direkt antreibbar. In der Welle 3 sind die drei Bohrungen 26, 27, 28 in Längsrichtung der Welle 3 durch die Welle 3 hindurch geführt. Die Bohrungen 26, 27, 28 weisen an beiden Wellenenden eine Öffnung an der Wellenstimseite auf. In der seitlichen Wellenwandung ist jeder Bohrung 26, 27, 28 jeweils ein Durchbruch 22, 23 zugeordnet. Die Durchbrüche 22, 23 sind in Längsrichtung um die Ausdehnung des Durchbruchs 22, 23 in Längsrichtung versetzt zueinander angeordnet. Die drei Durchbrüche 22, 23 sind im Wesentlichen baugleich.

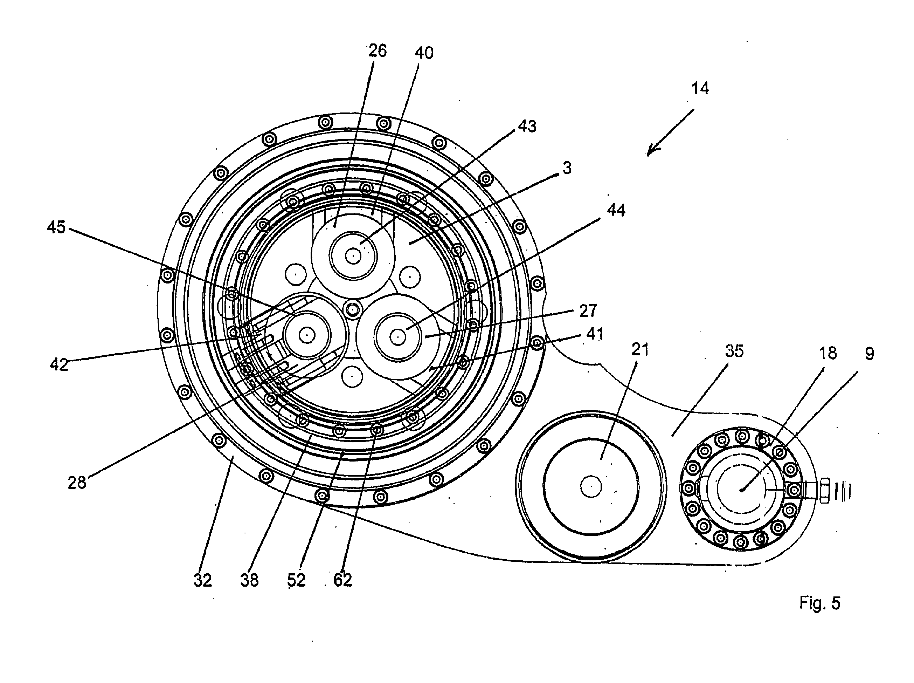

In Fig. 5 ist die dritte Schubgabel 14 in einem Schnitt senkrecht zur Längsrichtung dargestellt. Die Schubgabel 14 weist den Ringabschnitt 32 und die Nase 35 auf. Die Nase 35 ist hin und her verschiebbar auf der dritten Führungsstange 21 vorgesehen, während das äußerste Ende der dritten Nase 35 translationsfest in Längsrichtung mit der dritten Getriebestange 9 in einem Lager 18 verschraubbar ist.

In Fig. 5 ist die Welle 3 mit den drei Bohrungen 26, 27, 28 dargestellt. Zwischen der Welle 3 und dem Ringabschnitt 32 ist das dritte Ringbauteil 38 mit einem in die dritte Bohrung 28 greifenden dritten Arm 42 dargestellt. Das dritte Ringbauteil 38 ist über ein inneres Kugellager 62 translatorisch auf der Welle 3 hin und her verschiebbar. Das Ringbauteil 38 dreht sich mit der Welle 3 mit, es ist ihr gegenüber rotationsfest. Zwischen dem Ringabschnitt 32 und dem Ringbauteil 38 ist das dritte Schrägkugellager 52 vorgesehen.

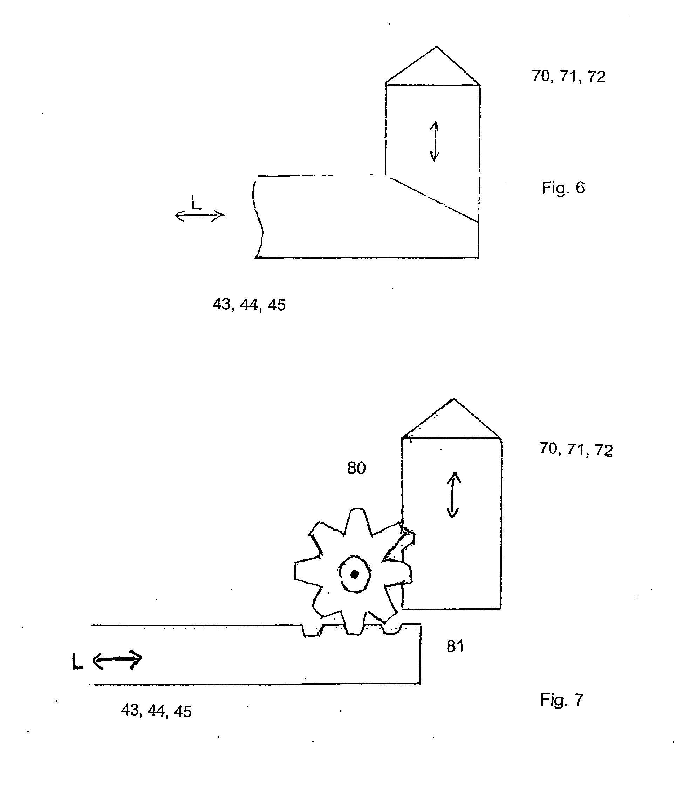

Die Figuren 6-9 zeigen vier Ausführungsformen eines Umlenkmechanismus, der die Hin- und Herbewegung in Langsrichtung der Welle 3 der drei Schubstangen 43, 44, 45 in eine translatorische Bewegung in radialer Richtung der Welle 3 umwandelt. Durch die radiale Verstellbarkeit und Steuerbarkeit der Schneiden 70 werden Hinterdrehungen in der Rohraussen- und Innenwandung ausformbar.

In Fig. 6 ist ein äußeres Ende der Schubstange 43 angeschrägt, und die Schräge der Schubstange 43 wirkt mit einer Schräge einer Schneide 70 zusammen. Der Umlenkmechanismus ist für alle drei Schneidwerkzeuge gleich ausgebildet. Die Schneiden 70, 71, 72 sind jeweils federvorgespannt.

Fig. 7 zeigt einen zweiten Umlenkmechanismus mittels eines Zahnrades 80, das die Hin- und Herbewegung der Schubstange 43 auf eine Radialbewegung der Schneide 70 überträgt. Dazu ist in die Außenwandung der Schneide als auch in die der Schubstange ein Zahnprofil 81 eingelassen, das mit Zähnen des in der durch die Bewegung der Schubstange und des Schneide aufgespannten Ebene drehbaren Zahnrades 80 zusammen wirkt.

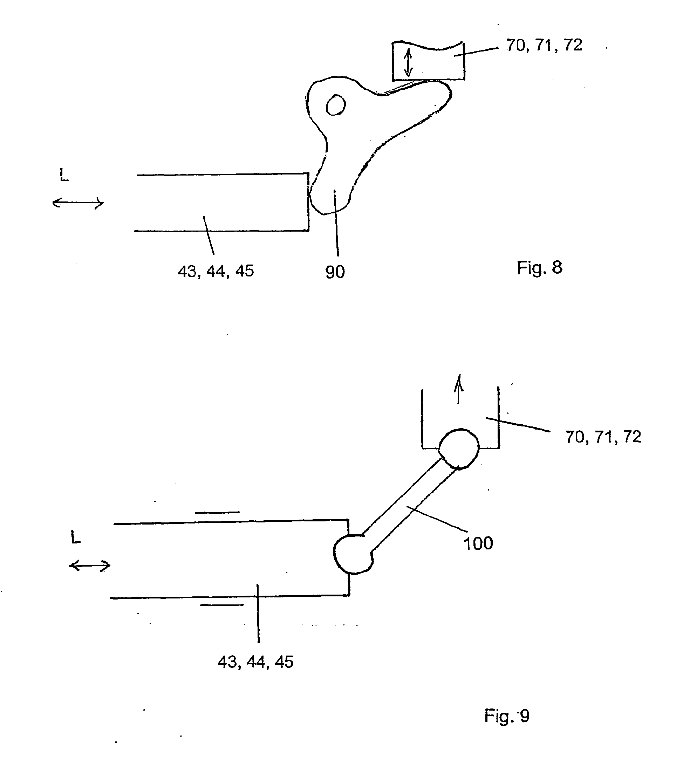

In Fig. 8 ist ein dritter Umlenkmechanismus mittels eines drehbar gelagerten Knochens 90 dargestellt. Die translatorische Bewegung der Schubstange 43 wird auf eine translatorische, aber radiale Bewegung der Schneide 70 übertragen. Die Schneide ist federvorgespannt.

In Fig. 9 ist eine vierte Ausführungsform in Form einer Gelenkstange 100 vorgesehen. Die Gelenkstange 100 weist an ihren beiden Enden jeweils eine Kugel auf, die drehbar in einer Pfanne an der Stirnseite der Schubstange 43 bzw. der Stirnseite der Schneide 70 eingelassen ist.

Das zu bearbeitende Rohrende ist in Fig. 6 -9 rechts angeordnet.

### Bezugszeichenliste

- 1: Drehdurchführung
- 2: Motor
- 3: rotierbare Welle
- 4: Antrieb
- 4a: Anschlus
- 4b: Anschluss
- 5: Antrieb
- 5a: Anschluss
- 5b: Anschluss
- 6: Antrieb
- 6a: Anschluss
- 6b: Anschluss
- 7: Gewindestange
- 8: Gewindestange
- 9: Gewindestange
- 11: Schneidwerkzeug
- 12: Schubgabel
- 13: Schubgabel
- 14: Schubgabel
- 16: Lager
- 17: Lager
- 18: Lager
- 19: Führungsstange
- 20: Führungsstange
- 21: Führungsstange
- 22: Durchbruch
- 23: Durchbruch
- 26: Längsbohrung
- 27: Längsbohrung
- 28: Längsbohrung
- 30: Ringabschnitt
- 31: Ringabschnitt
- 32: Ringabschnitt
- 33: Nase
- 34: Nase
- 35: Nase
- 36: Ringbauteil
- 37: Ringbauteil
- 38: Ringbauteil
- 40: Arm
- 43: Schubstange
- 44: Schubstange
- 45: Schubstange
- 50: Kugellager
- 51: Kugellager
- 52: Kugellager
- 60: Kugellager
- 61: Kugellager
- 62: Kugellager
- 70: Schneide
- 71: Schneide
- 72: Schneide
- 80: Zahnrad
- 81: Zahnprofil
- 90: Knochen
- 100: Gelenkstange

## Patentansprüche

1. Drehdurchführung mit:
- einer um eine in Längsrichtung (L) verlaufende Längsachse drehbaren Weile (3) mit wenigstens einer in Längsrichtung (L) verlaufenden Längsbohrung (26, 27, 28),
- in der jeweils eine Schubstange (43, 44, 45) in Längsrichtung (L) relativ zur Welle (3) hin und her verschiebbar angeordnet ist und
- mit wenigstens einem Durchbruch (22, 23) in einer seitlichen Wettenwandung der sich zu jeweils einer zugeordneten Längsbohrung (26, 27, 28) erstreckt und
- wenigstens einer außerhalb der Welle (3) in Längsrichtung (L) verfahrbaren jeweils einer der Schubstangen (43, 44, 45) zugeordneten Schubgabel (12, 13, 14) und
- jeweils einer durch den zugeordneten Durchbruch (22, 23) zur zugeordneten Längsbohrung (26, 27, 28) verlaufenden Wirkverbindung zwischen der zugeordneten Schubgabel (12, 13, 14) und der zugeordneten Schubstange (43, 44, 45), die eine Hin- und Herbewegung der zugeordneten Schubgabel (12, 13, 14) relativ zur Welle (3) auf die zugeordnete Schubstange (43, 44, 45) überträgt und eine Drehbewegung der Welle (3) relativ zur zugeordneten Schubgabel (12, 13, 14) ermöglicht.

2. Drehdurchführung nach Anspruch 1,
**dadurch gekennzeichnet, dass** die Wirkverbindung einen durch den zugeordneten Durchbruch (22, 23) greifenden Arm (40) aufweist, der translationsfest mit der zugehörigen Schubstange (43, 44, 45) verbunden ist und der Durchbruch (22, 23) in Längsrichtung (L) länger ist als die Ausdehnung des Arms (40) im Durchbruch (22, 23) und der Arm (40) im Durchbruch (22, 23) in Längsrichtung (L) hin und her verschiebbar ist.

3. Drehdurchführung nach Anspruch 2,
**dadurch gekennzeichnet, dass** der Arm (40) translationsfest mit der zugeordneten Schubgabel (12, 13, 14) verbunden ist.

4. Drehdurchführung nach Anspruch 1,
**gekennzeichnet durch** wenigstens ein die Welle (3) jeweils im Abschnitt eines Durchbruchs (22, 23) umlaufendes Ringbauteil (36, 37, 38), von dem jeweils einer der Arme (40) in jeweils einen Durchbruch (40) hinein absteht.

5. Drehdurchführung nach Anspruch 4,
**dadurch gekennzeichnet, dass** das Ringbauteil (36, 37, 38) auf der Welle (3) in Längsrichtung (L) hin und her verschiebbar angeordnet ist.

6. Drehdurchführung nach Anspruch 1,
**dadurch gekennzeichnet, dass** die Schubgabel (12, 13, 14) einen die Welle (3) konzentrisch umgreifenden Ringabschnitt (30, 31, 32) aufweist, der über ein äußeres Lager (60, 61, 62) mit einem gegenüber dem Ringabschnitt (30, 31, 32) rotierbaren, innen in dem Ringabschnitt (30, 31, 32) konzentrisch angeordneten Ringbauteil (36, 37, 38) verbunden ist.

7. Drehdurchführung nach Anspruch 6,
**dadurch gekennzeichnet, dass** an jedem Ringabschnitt (30, 31, 32) eine Nase (33, 34, 35) vorgesehen ist, an der jeweils eine Antriebseinrichtung (4, 5, 6, 7, 8, 9) angreift und die Schubgabel (12, 13, 14) hin und her verschiebt.

8. Drehdurchführung nach Anspruch 1,
**dadurch gekennzeichnet, dass** die wenigstens eine Längsbohrung (26, 27, 28) exzentrisch zur Drehachse der Welle (3) angeordnet ist.

9. Drehdurchführung nach Anspruch 7,
**gekennzeichnet durch** eine Mehrzahl von nebeneinander in der Welle (3) vorgesehen Längsbohrungen (26, 27, 28) und einer Mehrzahl den Längsbohrungen (26, 27, 28) zugeordneten Durchbrüchen (22, 23), die in Längsrichtung (L) um ihre jeweilige Längsausdehnung versetzt hintereinander angeordnet sind.

10. Drehdurchführung nach Anspruch 9,
**gekennzeichnet durch** eine Mehrzahl in Längsrichtung (L) versetzten, hintereinander an der Welle (3) jeweils im Abschnitt eines Durchbruchs (22, 23) angeordneten Schubgabeln (12, 13, 14).

11. Maschine zum Bearbeiten von Enden eines stangenförmigen metallischen Profilmaterials, insbesondere Metallrohre, mit
einer Haltevorrichtung für das Profilmaterial und
mit einer Drehdurchführung (1) nach einem der vorstehenden Ansprüche, und mit wenigstens einer mit jeweils einer Schubstange (43, 44, 45) in Wirkverbindung stehenden Schneide (70, 71, 72), die an einem der Haltevorrichtung zugewandten Ende der Welle (3) zur Bearbeitung des Endes des stangenförmigen Profilmaterials vorgesehen ist.

12. Maschine nach Anspruch 11,
**gekennzeichnet durch** eine elektronische Steuerung, die mit den Antrieben (4, 5, 6) der Gewindestangen (7, 8, 9) und dem Motor der Welle (3) über Steuerleitungen verbunden ist.

13. Maschine nach Anspruch 11, 12,
**dadurch gekennzeichnet, dass** zwischen der Schubstange (43, 44, 45) und der Schneide (70, 71, 72) ein Umlenkmechanismus vorgesehen ist.

14. Verfahren mit einer Drehdurchführung nach einem der Ansprüche 1 bis 10, indem :
eine Welle mit wenigstens einer in Längsrichtung (L) verlaufenden Längsbohrung (26, 27, 28) um eine in Längsrichtung (L) verlaufende Längsachse gedreht wird,
eine Hin- und Herbewegung wenigstens einer außerhalb der Welle (3) in Längsrichtung (L) verfahrbaren, jeweils einer der Schubstangen (43, 44, 45) zugeordneten Schubgabel (12, 13, 14) durch wenigstens einen seitlichen Durchbruch (22, 23) in einer Wellenwandung, die jeweils einer Längsbohrung (26, 27, 28) zugeordnet ist, hindurchgeführt wird, und eine in der Längsbohrung (26, 27, 28) angeordnete Schubstange (43, 44, 45) hin und her verschoben wird.

15. Verfahren zum Bearbeiten von Enden eines stangenförmigen metallischen Profilmaterials, insbesondere Metallrohre, mit einer Maschine nach einem der Ansprüche 11-13, indem:
das Profilmaterial in der Haltevorrichtung fixiert wird,
ein gewünschtes Fasenprofil in die Steuerung eingegeben wird,
und Motor (2) und die Antriebe (4, 5, 6) angesteuert werden, um das gewünschte Fasenprofil am Rohrende zu erzeugen.

## Claims

1. Rotary transmission leadthrough having:
- a shaft (3) rotatable about a longitudinal axis running in the longitudinal direction (L) and having at least one longitudinal bore (26, 27, 28) running in the longitudinal direction (L),
- in which respectively one push rod (43, 44, 45) is arranged so as to be displaceable back and forth relative to the shaft (3) in the longitudinal direction (L), and
- having at least one opening (22, 23) in a lateral wall of the shaft, which opening extends to respectively one assigned longitudinal bore (26, 27, 28), and
- at least one push fork (12, 13, 14) movable outside the shaft (3) in the longitudinal direction (L) and assigned to respectively one of the push rods (43, 44, 45), and
- respectively one operative connection, running through the assigned opening (22, 23) to the assigned longitudinal bore (26, 27, 28), between the assigned push fork (12, 13, 14) and the assigned push rod (43, 44, 45), which connection transmits a back and forth movement of the assigned push fork (12, 13, 14) relative to the shaft (3) to the assigned push rod (43, 44, 45), and enables a rotary movement of the shaft (3) relative to the assigned push fork (12, 13, 14).

2. Rotary transmission leadthrough according to Claim 1,
**characterised in that** the operative connection has an arm (40) reaching through the assigned opening (22, 23) and connected to the associated push rod (43, 44, 45) in a translationally fixed manner, and the opening (22, 23) is longer in the longitudinal direction (L) than the extent of the arm (40) in the opening (22, 23), and the arm (40) is displaceable back and forth in the opening (22, 23) in the longitudinal direction (L).

3. Rotary transmission leadthrough according to Claim 2,
**characterised in that** the arm (40) is connected to the assigned push fork (12, 13, 14) in a translationally fixed manner.

4. Rotary transmission leadthrough according to Claim 1,
**characterised by** at least one annular component (36, 37, 38) which surrounds the shaft (3) respectively in the section of an opening (22, 23) and from which respectively one of the arms (40) projects into respectively one opening (40)[sic].

5. Rotary transmission leadthrough according to Claim 4,
**characterised in that** the annular component (36, 37, 38) is arranged on the shaft (3) so as to be displaceable back and forth in the longitudinal direction (L).

6. Rotary transmission leadthrough according to Claim 1,
**characterised in that** the push fork (12, 13, 14) has an annular section (30, 31, 32) which concentrically encloses the shaft (3) and is connected via an outer bearing (60, 61, 62) to an annular component (36, 37, 38), rotatable relative to the annular section (30, 31, 32) and arranged concentrically inside the annular section (30, 31, 32).

7. Rotary transmission leadthrough according to Claim 6,
**characterised in that** on each annular section (30, 31, 32) there is provided a lug (33, 34, 35), on which respectively one drive device (4, 5, 6, 7, 8, 9) engages and displaces the push fork (12, 13, 14) back and forth.

8. Rotary transmission leadthrough according to Claim 1,
**characterised in that** the at least one longitudinal bore (26, 27, 28) is arranged eccentrically with respect to the axis of rotation of the shaft (3).

9. Rotary transmission leadthrough according to Claim 7,
**characterised by** a plurality of longitudinal bores (26, 27, 28) provided alongside one another in the shaft (3) and a plurality of openings (22, 23) assigned to the longitudinal bores (26, 27, 28) and arranged one behind the other in the longitudinal direction (L) offset by their respective longitudinal extent.

10. Rotary transmission leadthrough according to Claim 9,
**characterised by** a plurality of push forks (12, 13, 14) offset in the longitudinal direction (L) and arranged one behind the other on the shaft (3), each in the section of an opening (22, 23).

11. Machine for machining ends of a rod-shaped metallic profile material, especially metal pipes, having a holding device for the profile material and having a rotary transmission leadthrough (1) according to one of the preceding claims, and having at least one cutting edge (70, 71, 72) which is in operative connection with respectively one push rod (43, 44, 45) and is provided, at an end of the shaft (3) facing the holding device, for machining the end of the rod-shaped profile material.

12. Machine according to Claim 11,
**characterised by** an electronic control system, which is connected by control lines to the drives (4, 5, 6) of the threaded rods (7, 8, 9) and the motor of the shaft (3).

13. Machine according to Claim 11, 12,
**characterised in that** a deflection mechanism is provided between the push rod (43, 44, 45) and the cutting edge (70, 71, 72).

14. Method using a rotary transmission leadthrough according to one of Claims 1 to 10, whereby:
a shaft having at least one longitudinal bore (26, 27, 28) running in the longitudinal direction (L) is rotated about a longitudinal axis running in the longitudinal direction (L),
a back and forth movement of at least one push fork (12, 13, 14), movable outside the shaft (3) in the longitudinal direction (L) and assigned to respectively one of the push rods (43, 44, 45), is led through at least one lateral opening (22, 23) in a shaft wall assigned to respectively one longitudinal bore (26, 27, 28), and a push rod (43, 44, 45) arranged in the longitudinal bore (26, 27, 28) is displaced back and forth.

15. Method for machining ends of a rod-shaped metallic profile material, especially metal pipes, using a machine according to one of Claims 11-13, whereby:
the profile material is fixed in the holding device, a desired bevel profile is entered into the control system,
and the motor (2) and the drives (4, 5, 6) are actuated to generate the desired bevel profile at the pipe end.

## Revendications

1. Passage tournant qui comprend :
- un arbre (3) qui peut tourner autour d'un axe longitudinal orienté selon la direction longitudinale (L) et qui présente au moins un alésage longitudinal (26, 27, 28) selon cette direction longitudinale (L),
- dans chaque alésage longitudinal, et pouvant coulisser en va et vient en direction longitudinale (L) par rapport à l'arbre (3), une tige coulissante (43, 44, 45),
- au moins une ouverture (22, 23) pratiquée dans la paroi longitudinale de l'arbre selon la direction d'un alésage longitudinal (26, 27, 28) associé,
- au moins une chape coulissante (12, 13, 14) pouvant se déplacer en direction longitudinale (L) à l'extérieur de l'arbre en étant associée à une des tiges coulissantes (43, 44, 45),
- à travers le passage (22, 23) et se déplaçant par rapport à l'alésage longitudinal (26, 27, 28) associé, une liaison active entre la chape coulissante (12, 13, 14) et la tige coulissante (43, 44, 45) associées, qui transmet le mouvement de va et vient de la fourche (12, 13, 14) par rapport à l'arbre (3), à la tige coulissante (43, 44, 45) associée et permet ainsi à l'arbre (3) de tourner par rapport à la chape coulissante (12, 13, 14) associée.

2. Passage tournant selon la revendication 1, **caractérisé en ce que** la liaison active présente un bras (40) qui, à travers l'ouverture (22, 23) associée, est relié, avec solidarité en translation, à une tige coulissante (43, 44, 45) associée, cette ouverture (22, 23) étant, en direction longitudinale (L) plus longue que l'étendue du bras (40), de sorte que ce bras, dans cette ouverture (22, 23), peut coulisser en va et vient en direction longitudinale (L).

3. Passage tournant selon la revendication 2, **caractérisé en ce que** le bras (40) est relié, avec solidarité en translation, à la chape coulissante (12, 13, 14) associée.

4. Passage tournant selon la revendication 1, **caractérisé en ce qu'**il comporte au moins un composant annulaire (36, 37, 38) qui entoure l'arbre (3) dans au moins la partie d'un passage (22, 23) et d'où part un bras (40) associé qui fait saillie dans le passage (22, 23).

5. Passage tournant selon la revendication 4, **caractérisé en ce que** le composant annulaire (36, 37, 38) peut coulisser en va et vient sur l'arbre (3), selon la direction longitudinale (L).

6. Passage tournant selon la revendication 1, **caractérisé en ce que** la chape coulissante (12, 13, 14) présente une partie annulaire (30, 31, 32) qui entoure concentriquement l'arbre (3) et qui, par l'intermédiaire d'un palier externe (60, 61, 62), est relié à un composant annulaire (36, 37, 38) monté à l'intérieur de la partie annulaire (30, 31, 32), concentriquement à celle-ci, et pouvant tourner par rapport à elle.

7. Passage tournant selon la revendication 6, **caractérisé en ce que** chaque partie annulaire (30, 31, 32) présente un nez (33, 34, 35) avec lequel est en prise un dispositif d'entraînement (4, 5, 6, 7, 8, 9) qui fait coulisser en va et vient la chape coulissante (12, 13, 14).

8. Passage tournant selon la revendication 1, **caractérisé en ce que** l'alésage longitudinal (26, 27, 28) au nombre d'un au moins, est excentré par rapport à l'axe de rotation de l'arbre (3).

9. Passage tournant selon la revendication 7, **caractérisé en ce qu'**il comporte une pluralité d'alésages longitudinaux (26, 27, 28) disposés côte à côte dans l'arbre (3) ainsi qu'une pluralité de passages (22, 23) associés aux alésages précédents et dont chacun est, en direction longitudinale, décalé de sa longueur par rapport à l'autre.

10. Passage tournant selon la revendication 9, **caractérisé en ce qu'**il comporte une pluralité de chapes coulissantes (12, 13, 14) décalées en direction longitudinale (L) en étant disposées sur l'arbre (3) chacune dans la zone d'une ouverture (22, 23).

11. Machine d'usinage d'extrémités d'un profilé métallique en forme de tige, en particulier de tubes métalliques, qui comprend un dispositif de maintien du matériau profilé, un passage tournant (1) selon une des revendications précédentes, au moins une lame de coupe (70, 71, 72) en liaison active avec une tige coulissante (43, 44, 45), cette lame étant prévue à une extrémité de l'arbre (3) en regard du dispositif de maintien afin d'usiner l'extrémité du matériau profilé en forme de tige.

12. Machine d'usinage selon la revendication 11, **caractérisée en ce qu'**elle comprend une commande électronique qui est reliée aux entraînements (4, 5, 6) des tiges filetées (7, 8, 9) et au moteur de l'arbre (3) par des lignes de commande.

13. Machine d'usinage selon les revendications 11 et 12, **caractérisée en ce qu'**un mécanisme de renvoi est prévu entre la tige coulissante (43, 44, 45) et la lame de coupe (70, 71, 72).

14. Procédé utilisant un passage tournant selon une des revendications 1 à 10, selon lequel :
- un arbre présentant, en direction longitudinale (L), au moins un alésage longitudinal (26, 27, 28), tourne autour d'un axe à direction longitudinale (L),
- en direction longitudinale (L) et en va et vient à l'extérieur de l'arbre (3), au moins une chape coulissante (12, 13, 14) associée à une des tiges coulissantes (43, 44, 45) se déplace à travers au moins une ouverture latérale (22, 23) pratiquée dans la paroi de l'arbre, cette chape étant associée à un alésage longitudinal (26, 27, 28),
- une tige coulissante (43, 44, 45) montée dans l'alésage longitudinal (26, 27, 28), se déplace en va et vient.

15. Procédé d'usinage d'extrémités d'un profilé métallique en forme de tige, en particulier d'un tube métallique, au moyen d'une machine selon une des revendications 11 à 13, selon lequel :
- le matériau profilé est fixé dans un dispositif de maintien,
- le profil de chanfrein désiré est entré dans la commande,
- le moteur (2) et les entraînements (4, 5, 6) sont commandés de manière à obtenir à l'extrémité du tube le profilé de chanfrein désiré.
